# EUROPEAN PATENT APPLICATION

(11) **EP 1 129 774 A1**
(43) Date of publication of application: **05.09.2001**
(21) Application number: 99949437.0
(22) Date of filing: 26.10.1999
(51) Int. Cl.: B01J 20/18, B01J 29/80, B01J 29/44

(54) **ADSORBENT FOR HYDROCARBON AND CATALYST FOR EXHAUST GAS PURIFICATION**

(30) Priority: 28.10.1998 JP 30717298; 17.05.1999 JP 13620999
(71) Applicant: TOYOTA JIDOSHA KABUSHIKI KAISHA, Aichi-ken 471-8571 (JP)
(72) Inventor: ISHIKAWA, Norio, Toyota-cho, Toyota-shi, Aichi 471-8571 (JP); KANAZAWA, T., Toyota-cho, Toyota-shi, Aichi 471-8571 (JP)
(74) Representative: Winter, Brandl, Fürniss, Hübner, Röss, Kaiser, Polte Partnerschaft
(86) International application number: JP9905925
(87) International publication number: WO0024507

(57) **Abstract**

By constituting an HC adsorbing material with a zeolite having 100 or more of an Si0 ₂ /Al ₂ O ₃ molar ratio, having 1 *µ* m or less of an average primary particle diameter and being free from a monovalent metallic element, a synthesis becomes possible without adding a monovalent metallic element, such as Na, etc., since it is free from a monovalent metallic element, it exhibits a high HC adsorbing ability even after a durability test. Moreover, since the average primary particle diameter is small, a surface area, onto which the HC are adsorbed, enlarges, and an HC adsorbing amount enlarges.

Alternatively, by constituting an HC adsorbing material with a first zeolite, being composed of at least one member selected from the group consisting ZSM-5 and ferrierite, having 100 or less of an Si0 ₂ /Al ₂ O ₃ molar ratio and being loaded with at least one kind selected from the group consisting of Ag and Pd, and a second zeolite, being composed of a type Y zeolite having 200 or more of an Si0 ₂ /Al ₂ O ₃ molar ratio, it is possible to effectively adsorb lower HC and higher HC.

And, by making it a catalyst for purifying an exhaust gas by using the latter HC adsorbing member and an oxidizing catalyst combinedly, the adsorbed lower HC and higher HC are discharged when a temperature is increased, and are oxidized and purified effectively by the oxidizing catalyst, whose temperature becomes an activated temperature, and accordingly a high HC conversion is revealed.

## Description

### Technical Field

The present invention relates to a hydrocarbon adsorbing member, which adsorbs hydrocarbons (HC) emitted from an internal combustion engine of an automobile, etc., for example, and a catalyst for purifying an exhaust gas, which can effectively adsorb and purify HC in the exhaust gas, and particularly relates to a hydrocarbon adsorbing member and a catalyst for purifying an exhaust gas, which employ a zeolite.

### Background Art

Since a zeolite is also referred to as another name, a molecular sieve, it has micro pores, which have a pore diameter of less than 2 nm and which are equal to sizes of molecules, in addition to that it is used as an adsorbing member, and is utilized in many reactions as a catalyst. Moreover, in order to neutralize the negative charge of the alumina (Al ₂ O ₃ ) being the main component, it includes positive ions, since these positive ions can be readily replaced by the other positive ions in an aqueous solution, it is also utilized as a positive-ion exchanger.

By utilizing such qualities of the zeolite, it has been considered conventionally to utilize it in an automotive catalyst for purifying an exhaust gas, for example, in Japanese Unexamined Patent Publication (KOKAI) No. 3-232,533, a catalyst for purifying an exhaust gas is disclosed, catalyst in which a noble metal, such as platinum, palladium, etc., is loaded on a zeolite.

However, since the zeolite itself exhibits a low noble-metal loadability, in a catalyst in which a noble metal is loaded on a zeolite, a noble-metal loading amount is so small that there arises a drawback in that the catalytic performance becomes insufficient. Further, the noble metal is not activated until it becomes about 300 °C or more. Furthermore, in a case where an engine is in a cold state, since a fuel-air mixture is supplied whose fuel concentration is higher than that in the ordinary driving, an amount of hydrocarbons (hereinafter referred to as "HC") included in the exhaust gas is large. Accordingly, in a case where an exhaust-gas temperature is low when starting up, and so forth, it is not possible to sufficiently purify the HC in the exhaust gas by the catalyst in which the noble metal is loaded on the zeolite.

Hence, it has been carried out to use a zeolite as an HC adsorbing member. For instance, in Japanese Unexamined Patent Publication (KOKAI) No. 5-317,701, there is set forth to make a zeolite, whose SiO ₂ /Al ₂ O ₃ molar ratio falls in a predetermined range, into an HC adsorbing member and to combinedly use this one with an oxidizing catalyst. Moreover, in Japanese Examined Patent Publication (KOKOKU) No. 6-15,016 and Japanese Unexamined Patent Publication (KOKAI) No. 6-210,136, there are disclosed exhaust-gas purifying apparatuses, in which an HC adsorbing member, being composed of a zeolite capable of adsorbing the HC, and an oxidizing catalyst, disposed on a downstream side of this HC adsorbing member and loaded with a noble metal capable of oxidizing and purifying the HC, are used combinedly. Thus, the HC purifying performance is improved in the cold state, starting up, and so on.

Namely, by using a zeolite and an oxidizing catalyst combinedly, the HC are temporarily adsorbed on the zeolite in a low temperature region, and the emission is controlled. And, the adsorbed HC are discharged from the zeolite when the zeolite becomes a predetermined temperature or more, and are oxidized and purified by the oxidizing catalyst, which exists in proximity thereto or on a downstream side thereto. Moreover, in a high temperature region, since the activity of the oxidizing catalyst is high, the HC are oxidized and purified sufficiently. Accordingly, from the low temperature region to the high temperature region, it is possible to stably purify the HC.

Moreover, in Japanese Unexamined Patent Publication (KOKAI) No. 6-154,538, there is disclosed a process, in which a zeolite is placed on an upstream side of a 3-way catalyst in an exhaust-gas flow, the HC in the exhaust gas are adsorbed on the zeolite when the temperature is low, and the adsorbed HC are discharged so that they are purified by the 3-way catalyst when the temperature is increased. By this process as well, it is possible to efficiently purify the HC, included in the exhaust gas, in the cold state, starting up, etc., by the 3-way catalyst.

As a zeolite used in such applications, a natural zeolite is also used, but a synthesized zeolite, such as ZSM-5, a type MFI zeolite, and so forth, has been widely used recently. This synthesized zeolite is produced, for instance, as disclosed in Japanese Unexamined Patent Publication (KOKAI) No. 9-253,484, etc., by mixing an aqueous solution, in which aluminum sulfate, sulfuric acid and water are mixed, with a sodium chloride aqueous solution in advance, adding thereto and mixing therewith an aqueous solution, in which water glass is dissolved, mixing therewith a template member, such as mordenite, tetrapropyl ammonium bromide, and so on, and being kept stirring at 180 °C for 30 hours.

However, in an ordinary natural zeolite, the HC adsorbing amount is still insufficient, and it has been required to increase the HC adsorbing amount with respect to a unit volume of a zeolite. In order to increase the HC adsorbing amount with respect to the unit volume, it is possible to think of enlarging the surface area of a portion, on which the HC adsorb, but, since the HC adsorb adjacent to a crystalline surface of primary particles of the zeolite, it is effective to decrease the primary particle diameters in order to enlarge the surface area.

For example, in Japanese Unexamined Patent Publication (KOKAI) No. 9-253,484, there is set forth that the hexagonal pillar-shaped crystalline size of a type MFI zeolite is regulated in a range of 1 - 10 *µ* m, and there is also set forth that the heat resistance is improved by making it falling in the range. However, by using the zeolite disclosed in the publication, the HC adsorbing amount was still insufficient, and, in particular, there was a drawback in that the HC adsorbing amount is reduced remarkably when a durability test was carried out.

On the other hand, carbon monoxide (CO), hydrocarbons (HC) and nitrogen oxides (NOₓ) are included in the exhaust gases, which are emitted from automobiles, and so forth, as harmful substances. As a catalyst, a catalyst for purifying an exhaust gas has been used widely to purify these, catalyst in which a.noble metal is loaded on a porous oxide support, such as Al ₂ O ₃ , etc. However, in a case where this exhaust-gas purifying catalyst is used, the purifying performance of the HC is likely to be influenced by the exhaust-gas temperature, and there is a problem in that the HC cannot be purified until it is about 300 °C or more. This is because, as mentioned earlier, the activation temperature of the noble metal to the HC exists in about 300 °C or more. Hence, even in the case where the exhaust-gas temperature is low in starting up, and so on, the HC cannot be oxidized and purified sufficiently by the noble metal.
Moreover, in a case where the engine is in the cold state, since a fuel-air mixture whose fuel concentration is higher than that in the ordinary driving, the amount of HC, included in the exhaust gas, is large. Accordingly, when the engine is in the cold state or when it is started up, it is desirable to particularly purify the HC with good efficiency.

Hence, as mentioned above, it has been carried out to combinedly use an HC adsorbing member and an oxidizing catalyst. In such an exhaust-gas purifying apparatus, since the HC adsorbing member decreases the HC adsorbing performance when it is at an elevated temperature, the HC, which have been temporarily adsorbed onto the HC adsorbing member in a low temperature, are eliminated from the HC adsorbing member as the temperature is increased. At this moment, when there is a large difference between the temperature, at which the once adsorbed HC are eliminated from the HC adsorbing member, and an activation temperature, at which the oxidizing catalyst or the oxidizing catalyst is activated so as to be able to oxidize and purify the HC, and when the exhaust-gas temperature falls in the range of this temperature difference, the amount of the HC, which are not adsorbed onto the HC adsorbing material as well as which are not purified by the catalyst, comes to increase. Consequently, in the aforementioned exhaust-gas purifying apparatus, in which the HC adsorbing member and the oxidizing catalyst are used combinedly, in order to further reduce the HC emission amount, it is desirable to make the difference between the elimination temperature, at which the HC are eliminated from the HC adsorbing member, and the activation temperature of the oxidizing temperature as small as possible.

Hence, in the aforementioned Japanese Examined Patent Publication (KOKOKU) No. 6-15,016, as an HC adsorbing material, which can show the adsorbing performance up to a relatively high temperature, mordenite or a type Y zeolite is employed. While, in the aforementioned Japanese Unexamined Patent Publication (KOKAI) No. 6-210,136, the loading amount of the noble metal is increased so that the activation temperature of the oxidizing catalyst is lowered.

By the way, in the HC included in the exhaust gas, there exist those having a variety of structures whose number of carbon atoms, bonds between carbon and carbon, etc., differ from each other. While, in zeolites, there exist a variety of them whose SiO ₂ /Al ₂ O ₃ molar ratio, pore-diameter size, etc., differ from each other. Due to these differences, the adsorbing performances of the zeolites themselves and the kinds of HC, which can be effectively adsorbed thereon, come to be different.

Consequently, even when mordenite and a Y type zeolite is selected simply as an HC adsorbing member, it is extremely difficult to securely adsorb all kinds of HC until the activation temperature of the oxidizing catalyst. Especially, since the lower HC, having a small number of carbon atoms, have a small molecular bulkiness, there is a problem in that the lower the HC, which are adsorbed physically in the pores of the HC adsorbing member, are, the more they are likely to be eliminated, and in that they are emitted in the starting up, and so on.

And, there is a limit in the decrement of the activation temperature by enlarging the loading amount of a noble metal, and it is difficult to lower the activation temperature down to a low temperature region, such as in the starting up, and so forth.

Accordingly, by the exhaust-gas purifying apparatuses of the aforementioned conventional technic, it is difficult to stably adsorb and purify the HC having a small number of carbon atoms as well as the HC having a large number of carbon atoms, and it is not possible to sufficiently reduce the HC emission amount in a low temperature region, such as in the starting up, and so on.

The present invention has been developed in view of these circumstances, its first object is to enlarge the HC adsorbing amount with respect to a unit volume as well as to make an HC adsorbing member, which exhibits a small lowering degree of the HC adsorbing amount after a durability test.

Moreover, a second object of the present invention is to provide an HC adsorbing member, which can stably adsorb the HC having a variety of structures whose number of carbon atoms, bonds between carbon and carbon, etc., differ from each other.

In addition, a third object of the present invention is to provide a catalyst for purifying an exhaust gas, catalyst which can be intended to further reduce the HC emission amount by making it capable of stably adsorbing and purifying a diversity of HC.

One of the characteristics of an HC adsorbing member according to the present invention, which solves the aforementioned assignments, is that it comprises a zeolite having 100 or more of a molar ratio of a silica component with respect to an alumina component (SiO₂/Al₂O₃) and having 1 *µ*m or less of an average primary particle diameter, and that it is free from a monovalent metallic element.

Alternatively, one of the characteristics of an HC adsorbing member according to the present invention, which solves the aforementioned assignments, is that it comprises: a first zeolite being composed of at least one member selected from the group consisting of ZSM-5 and ferrierite, having 100 or less of a molar ratio of a silica component with respect to an alumina component (SiO ₂ /Al ₂ O ₃ ) and being loaded with at least one kind selected from the group consisting of silver (Ag) and palladium (Pd); and a second zeolite being composed of a type Y zeolite having 200 or more of a molar ratio of a silica component with respect to an alumina component (SiO ₂ /Al ₂ O ₃ ).

And, one of the characteristics of a catalyst for purifying an exhaust gas according to the present invention, which solves the aforementioned assignments, it comprises: a first zeolite being composed of at least one member selected from the group consisting of ZSM-5 and ferrierite, having 100 or less of a molar ratio of a silica component with respect to an alumina component (SiO ₂ /Al ₂ O ₃ ) and being loaded with at least one kind selected from the group consisting of silver (Ag) and palladium (Pd); a second zeolite being composed of a type Y zeolite having 200 or more of a molar ratio of a silica component with respect to an alumina component (SiO ₂ /Al₂ O₃); and an oxidizing catalyst being composed of a porous oxide loaded with a noble metal.

### Brief Description of the Drawings

Fig. 1 is a graph for illustrating the HC adsorbing amounts of examples of the present invention and comparative examples.

Fig. 2 is a graph for illustrating the results of the HC emission amounts, which were measured with regard to examples of the present invention and comparative examples.

### Best Mode for Carrying Out the Invention

(1) Operations of First HC Adsorbing Member
A zeolite has a silica component and an alumina component, and sodium elements (Na) are inevitably included in a natural zeolite.
While, in a synthesized zeolite, it is intended to introduce a monovalent metallic element thereinto in order to balance between tetravalent aluminum (Al ⁴⁺ ) and trivalent silicon (Si ³⁺ ), and, so does in Japanese Unexamined Patent Publication (KOKAI) No. 9-253,484, Na is mainly added.

However, the inventors of the present invention have studied earnestly on the causes of the sharp decrement of the HC adsorbing amount by carrying out a durability test, as a result, they found out that the monovalent metallic element, such as Na, etc., which was included in the conventional zeolite, was the main causative substance. Moreover, in a case where a high silica zeolite, whose SiO ₂ /Al ₂ O ₃ molar ratio was high, was synthesized, it was possible to synthesize it without adding the monovalent metallic element, such as Na, etc., in order to balance between Al ⁴⁺ and Si ³⁺ , and it became apparent that the durability of the resulting zeolite was also sufficient. The present invention was thus completed.

Namely, in the HC adsorbing member of the present invention, the detailed reasons are not clear, but, since it does not include the monovalent metallic element, such as Na, etc., the decrement of the HC adsorbing amount hardly occurs when carrying out a durability test. And, since the SiO ₂ /Al ₂ O ₃ molar ratio is 100 or more, it is possible to synthesize a zeolite without adding the monovalent metallic element, such as Na, etc. Moreover, since the primary particle diameter is 1 *µ* m or less, it has an extremely high surface area, and the HC adsorbing amount with respect to a unit volume is considerably large in the initial period.

Consequently, in accordance with the HC adsorbing member of the present invention, it is possible to secure a high HC adsorbing amount from the initial period to the post-durability test, and it is possible to efficiently purify an exhaust gas for a long period of time by using it in an exhaust-gas purifying catalyst for automobiles or by using it combinedly with an exhaust-gas purifying catalyst.

In the HC adsorbing member of the present invention, the monovalent metallic element is referred to as an alkali metal, such as Na, K, Li, Rb, Cs and Fr, and is mainly referred to as Na. Without including this monovalent metallic element, the drawback is avoided in which the HC adsorbing amount is lowered after a durability test.

Further, in the HC adsorbing member of the present invention, when the average primary particle diameter exceeds 1 *µ* m, the surface areas adjacent to the crystals decrease, surface areas which are effective in the adsorption of the HC, and it is difficult to secure a sufficient HC adsorbing amount. Note that, in order to make the average particle diameter 1 *µ* m or less, it can be adjusted so as to be in the synthesis of the zeolite, or the zeolite can be physically pulverized so as to be 1 *µ* m or less. To make the average particle diameter 1 *µ* m or less in the synthesis of the zeolite, it is readily carried out properly by adjusting the addition amount of a template member.

Furthermore, in the HC adsorbing member of the present invention, when the SiO ₂ /Al ₂ O ₃ molar ratio is less than 100, since the elimination of Al takes place in a durability test so that the durability is likely to lower, the stability of the zeolite lowers, and there arises a case where it is difficult to carry out the synthesis without adding the monovalent metallic element.
Accordingly, the SiO ₂ /Al ₂ O ₃ molar ratio is adapted to be 100 or more.

As the zeolite, it is possible to exemplify zeolites of various structures, such as ZSM-5, mordenite, type Y zeolite, type X zeolite, silicarite, and so on, but a zeolite of the ZSM-5 structure, which has three-dimensional pores and is good in terms of the adsorbing performance, is especially preferred.

Moreover, in the HC adsorbing member of the present invention, it is possible to load a noble metal, such as Pt, Rh, Pd, etc., on the zeolite. By thus loading the noble metal, there arises a case where, since the cracking of HC occurs to become lower-molecular HC, the adsorbing ability improves. However, the HC adsorbing amount is not affected greatly, and, since there rather arises a case where a drawback is revealed in which the durability lowers, it is preferable to avoid loading the noble metal.

The zeolite, which is used in the HC adsorbing member of the present invention, can be produced by adding a template member to a silica sol at least to form a gel, by carrying out a hydrothermal synthesis and thereafter by burning.

Here, as the silica sol, it can be a general silica sol, or silicone alkoxide can be used. Additionally, an aluminum source, such as aluminum nitrate, an alumina sol or aluminum alkoxide can be further added. In this case, it is desirable to add it so that the alumina is 0.88% by weight or less by conversion into metallic Al in a formed zeolite. When the adding amount of the aluminum source enlarges more than this, the SiO ₂ /Al ₂ O ₃ molar ratio of a formed zeolite becomes less than 100.

The template member is for crystallizing a formed gel into a zeolite structure, for instance, in a case where ZSM-5 is produced, it is possible, in a manner similar to the conventional art, it is possible to use a salt, hydroxide, oxide or derivative of a quaternary ammonium compound, such as tetrapropyl ammonium, tetrapropyl ammonium hydroxide, tetrapropyl ammonium bromide, tetrapropyl ammonium chloride, tetraethyl ammonium, 1,3-diamino propane, etc.

In order to gelate the silica sol and the template member at least, it is possible to use a known reaction, such as the sol-gel process, the co-precipitation process, etc. And, it is possible to control a particle-size distribution of formed zeolite crystals by a ratio between the silica sol and the template member, when making the average primary particle diameter 1 *µ* m or less, it is desirable to make a molar ratio of the template member with respect to SiO ₂ falling in a range of the template member/the SiO ₂ = 1/5-1/2.

The hydrothermal synthesis can preferably be carried out under the condition of 100-170 °C . When the hydrothermal-synthesis temperature is less than 100 °C , it is difficult for zeolite crystals to grow, when the hydrothermal-synthesis temperature exceeds 170 °C , zeolite crystals are coarsened. Particularly desired is a range of 120-150 °C . This hydrothermal synthesis is carried out in order to generate and grow zeolite crystals, and it is processed in a sealed container for about 30 minutes to 5 days. On this occasion, it possible to carry out the pressurizing either one of the processes, under a ground pressure or under a pressure application, it is usually carried out under a ground pressure.

The resulting gel is washed with water, thereafter a drying process is generally carried out, and thereafter it is burned. The burning is generally carried out in an oxidizing atmosphere, such as in air, etc., and the condition is such an extent that it is heated at 600 °C for 8 hours. The template member is burned out by this burning, and a pure zeolite is produced.

Namely, in accordance with the HC adsorbing member of the present invention, a high HC adsorbing ability is exhibited from the initial period to the post-durability test. Accordingly, for example, when it makes an automotive exhaust-gas purifying catalyst by being used combinedly with an oxidizing catalyst, the HC purifying performance improves in the cold state, starting up, and so forth. Alternatively, when it is used combinedly with a 3-way catalyst, the HC, which are included in an exhaust gas in the cold state, starting up, and so on, can be efficiently purified by the 3-way catalyst.

(2) Operations of Second HC Adsorbing Member
Alternatively, in an HC adsorbing member according to the present invention, which comprises a first zeolite being composed of at least one member selected from the group consisting of ZSM-5 and ferrierite, having 100 or less of a molar ratio of a silica component with respect to an alumina component (SiO ₂ /Al ₂ O ₃ ) and being loaded with at least one kind selected from the group consisting of silver (Ag) and palladium (Pd), and a second zeolite being composed of a type Y zeolite having 200 or more of a molar ratio of a silica component with respect to an alumina component (SiO ₂ /Al ₂ O ₃ ), a diversity of HC can be adsorbed efficiently by the following operations.

Namely, in a low temperature range, in which an exhaust-gas temperature reaches the activation temperature of the noble metal, it is possible to chemically adsorb the lower HC, which have a small number of carbon atoms and are likely to be eliminated, with Ag and Pd by the first zeolite, which is composed of at least one member selected from the group consisting of ZSM-5 and ferrierite loaded with at least one kind selected from the group consisting of Ag and Pd, and it is possible to physically adsorb the lower HC, which Ag and Pd cannot adsorb chemically, with the ZSM-5 and the ferrierite, whose pore diameters are small. While, it is possible to physically adsorb the higher HC, which have a large number of carbon atoms and are less likely to be eliminated, by the type Y zeolite, which has 200 or more of the SiO ₂ /Al ₂ O ₃ molar ratio, namely by a type Y zeolite, which exhibits a high hydrophobic property and has large pore diameters. Hence, it is possible to stably adsorb from the lower HC, which have a small number of carbon atoms, to the higher HC, which have a large number of carbon atoms. In particular, it is possible to securely adsorb and hold the lower HC as well, which are less likely to be adsorbed only by the physical adsorption and which are likely to be eliminated even if they are adsorbed once, to an elevated temperature by the chemical adsorption onto Ag and Pd.

(3) Operations of Catalyst for Purifying Exhaust Gas
In the catalyst of the present invention using the above-described HC adsorbing member, in a low temperature region, in which an exhaust-gas temperature reaches the activation temperature of the noble metal, in the manner as set forth above, it is possible to chemically adsorb and to physically adsorb the lower HC, which have a small number of carbon atoms and are likely to be eliminated, onto the first zeolite, and it is possible to physically adsorb the higher HC, which have a large number of carbon atoms and are less likely to be eliminated, with the type Y zeolite, which has a high hydrophobic property and has large pore diameters.

And, in a high temperature range, in which an exhaust-gas temperature reaches the activation temperature of the noble metal or thereafter, it is possible to oxidize and purify the HC, which are eliminated from the first zeolite and the second zeolite, as well as the HC, which are emitted directly from the engine, by the oxidizing catalyst. Besides, as aforementioned, since it is possible to adsorb and hold even the lower HC, which are difficult to be adsorbed and held until the activation temperature of the noble metal, to a further elevated temperature by chemically adsorbing them onto Ag and Pd, which are loaded on the first zeolite, it is possible to securely reduce the amount of the lower HC, which are emitted without being adsorbed by a zeolite and being purified by a noble metal.

Consequently, in accordance with the exhaust-gas purifying catalyst of the present invention, it is possible to stably adsorb and purify various kinds of HC, and it is possible to intend so as to further reduce the HC emission amount.

(4) Descriptions on Constitutions of Second HC Adsorbing Member and Exhaust-gas Purifying Catalyst

### <First Zeolite>

In the HC adsorbing Member and exhaust-purifying catalyst of the present invention, the first zeolite is mainly for adsorbing the lower HC whose number of carbon atoms is small, and is composed of a zeolite having small pore diameters so as to be capable of effectively carrying out the physical adsorption. Namely, this first zeolite is composed of at least one member selected from the group consisting of ZSM-5 having a pore diameter of 5.5 Å and ferrierite having a pore diameter of 4 Å . ZSM-5, for instance, can physically adsorb propane (C ₃ H ₈ ) and propylene (C ₃ H ₆ ), whose number of carbon atoms is 3 and which have a molecular diameter of about 4.89 Å , effectively, and the ferrierite, for example, can physically adsorb ethane (C ₂ H ₆ ) and ethylene (C ₂ H ₄ ), whose number of carbon atoms is 2 and which have a molecular diameter of about 4 Å .

Here, the lower the HC, which have been adsorbed onto the zeolite, become, the more they are likely to be eliminated. Hence, by the physical adsorption alone, it is difficult to adsorb and hold the HC onto the zeolite up to a much higher temperature (the activation temperature). Therefore, this first zeolite has an SiO ₂ /Al ₂ O ₃ molar ratio of 100 or less, and is loaded with at least one kind selected from the group consisting of Ag and Pd. By loading at least one kind selected from the group consisting of Ag and Pd, it is possible to chemically adsorb the lower HC onto at least one kind selected from the group consisting of the Ag and Pd, and accordingly it becomes possible to adsorb and hold the lower HC up to a much higher temperature.

When the SiO ₂ /Al ₂ O ₃ molar ratio is more than 100, it is difficult to load at least one kind selected from the group consisting of Ag and Pd. From the perspective of enlarging the loading amount of at least one kind selected from the group consisting of Ag and Pd, it is preferable to make the SiO ₂ /Al ₂ O ₃ molar ratio of the first zeolite being 70 or less. Note that, when the SiO ₂ /Al ₂ O ₃ molar ratio of the first zeolite becomes less than 25, since the aluminum is likely to be eliminated in a high-temperature water-vapor atmosphere, it is desirable to make the lower limit of the SiO ₂ /Al ₂ O ₃ molar ratio of the first zeolite being 25.

It is preferable to carry out the loading of at least one kind selected from the group consisting of Ag and Pd onto the first zeolite by ion-exchange loading. In a case where the loading is not carried out by an ion-exchange process, at least one kind selected from the group consisting of Ag and Pd, which is loaded, is likely to move, the granular growth of at least one kind selected from the group consisting of Ag and Pd occurs when a high-temperature durability test is carried out, and there arises a drawback in that the HC adsorbing ability lowers. Contrary to this, when the ion-exchange loading is carried out, it becomes possible to load at least one kind selected from the group consisting of Ag and Pd onto the first zeolite in a highly dispersed manner up to a further elevated temperature. Note that, when it is the zeolite having 100 or less of the SiO ₂ /Al ₂ O 3 molar ratio, since it is possible to secure sufficient ion-exchange sites, it is possible to sufficiently load at least one kind selected from the group consisting of Ag and Pd thereonto by an ion-exchange process. Conversely speaking, when the SiO ₂ /Al ₂ O ₃ molar ratio is larger than 100, due to the insufficiency of the ion-exchange sites, there arises a shortage in an amount of at least one kind selected from the group consisting of Ag and Pd, which can be loaded thereonto by an ion-exchange process.

In addition, it is desired that the loading amount of at least one kind selected from the group consisting of Ag and Pd can fall in a range of 5-20 g with respect to 1 liter of the first zeolite, respectively. When it is less than this, no effects resulting from the loading are obtained, when it is loaded more than this, the effects saturate, and, at the same time, the cost increment is brought about. Note that, in a case where Ag and Pd are co-loaded thereonto, it is desired that it can be in a summed amount of 5-20 g with respect to the first zeolite.

By the way, the lower HC, which can be chemically loaded onto at least one kind selected from the group consisting of Ag and Pd loaded on the first zeolite, are olefin hydrocarbons having a double bond (ethylene and propylene). Hence, it is necessary to adsorb the lower HC, which do not have a double bond, for instance, ethane and propane, onto a zeolite, which has small pore diameters, namely, in the pores of ZSM-5 or ferrierite by the physical adsorption.

Hence, from the perspective of more effectively adsorbing the lower HC, which are not adsorbed chemically onto at least one kind selected from the group consisting of Ag and Pd, it is desirable to further employ ZSM-5, which has an SiO ₂ /Al ₂ O ₃ molar ratio of 500 or more, as the first zeolite. The ZSM-5, which has an SiO₂ /Al ₂ O ₃ molar ratio of 500 or more, exhibits a high hydrophobic property, it can adsorb the lower HC more preferentially than H ₂ O molecules, and it becomes possible to effectively adsorb the lower HC, which cannot be chemically adsorbed by at least one kind selected from the group consisting of Ag and Pd, by the physical adsorption. Moreover, the ZSM-5, which has an SiO ₂ /Al ₂ O ₃ molar ratio of 500 or more, has advantages in that the HC, which are adsorbed in the pores, are less likely to cause caulking and the decrement of the HC adsorbing ability caused by the elapsing time is less likely to occur, and that, even under a further elevated temperature condition (800 °C or more), the elimination of Al (The tetra-coordinations in the zeolite turn into hexa-coordinations.) is less likely to take place, and there is an advantage in that the decrement of the HC adsorbing ability is less likely to arise.

<Second Zeolite>
The second zeolite is for mainly adsorbing the higher HC, which have a large number of carbon atoms, and is composed of a zeolite, which has large pore diameters, so that the higher HC can be physically adsorbed effectively. Namely, this second zeolite is composed of a type Y zeolite, which has a pore diameter of 8 Å . This type Y zeolite can physically adsorb, for example, toluene (C ₇ H ₈ ), whose molecular diameter is about 6.8 Å , effectively.

Moreover, the type Y zeolite, serving as this second zeolite, is the one, which has an SiO ₂ /Al ₂ O ₃ molar ratio of 200 or more. When the SiO ₂ /Al ₂ O ₃ molar ratio is less than 200, H ₂ O molecules, rather than the HC, are adsorbed preferentially onto the type Y zeolite by the increment of the hydrophilic property, the adsorption of the HC is obstructed. In addition, the type Y zeolite, which has an SiO ₂ /Al ₂ O ₃ molar ratio of 200 or more, has advantages in that the HC, which are adsorbed in the pores, are less likely to cause caulking and the decrement of the HC adsorbing ability caused by the elapsing time is less likely to occur, and that, even under a further elevated temperature condition (800 °C or more), the elimination of Al is less likely to take place and the decrement of the HC adsorbing ability is less likely to arise. From the perspective of further improving the adsorption efficiency of the HC by improving the hydrophobic property of the type Y zeolite, it is preferable to make the SiO ₂ /Al ₂ O ₃ molar ratio of the type Y zeolite, serving as the second zeolite, being 400 or more.

<Mixing Ratio of First Zeolite and Second Zeolite>
In the HC adsorbing member and exhaust-gas purifying catalyst of the present invention, it is preferable to make the composition ratio between the aforementioned first zeolite and the aforementioned second zeolite falling in a range of the first zeolite/the second 'zeolite = 1/1-9/1 by weight. By making it falling in this range, it is possible to intend to equalize the adsorbing performance with regard to the lower HC and the adsorbing performance with regard to the higher HC. Moreover, by increasing the first zeolite, which has small pore diameters, more than the second zeolite, which has large pore diameters, it is possible to effectively adsorb and hold the lower HC, which are especially likely to be eliminated, and accordingly the HC adsorbing ratio improves remarkably. Note that, when the second zeolite, which has large pore diameters, is less than this range, it is difficult to adsorb the higher HC.

<Oxidizing Catalyst>
In the exhaust-gas purifying catalyst of the present invention, the oxidizing catalyst is constituted by a porous oxide loaded with a noble metal. As the porous oxide, on which the noble metal is loaded, Al ₂ O ₃, SiO ₂ , TiO ₂ , ZrO ₂ , SiO ₂ -Al ₂ O ₃ , etc., are exemplified, and Al ₂ O ₃, which is good in terms of the heat resistance and which has a high specific surface area, is especially desirable. Moreover, as the noble metal, at least one kind selected from the group consisting of Pt, Rh and Pd can make it. It is preferable to make a summed loading amount of this noble metal being 3 g or more with respect to 1 liter of a support substrate. By thus constituting it, it is possible to intend to further lower the activation temperature of the noble metal.

It is desired that ceria (CeO ₂ ) is included in this oxidizing catalyst. Due to the oxygen storage-and-release ability of the ceria, the fluctuation of the exhaust-gas atmosphere is adjusted so that it is made adjacent to the stoichiometric atmosphere, and thereby the purifying performance further improves.

<Mixing Ratio>
It is desired that a composition ratio of the first zeolite and the second zeolite as well as the oxidizing catalyst falls in a ratio of the first zeolite and the second zeolite/oxidizing catalyst = 1/2-2/1 by weight. Thus, it is possible to balance between the HC adsorbing performance and the HC oxidizing performance, and it is possible to effectively reduce the HC emission amount.

(5) Forms of Exhaust-gas Purifying Catalyst
As one of the embodiment forms of the aforementioned present exhaust-gas purifying catalyst, an embodiment is exemplified which is constituted by a support substrate and a coating layer formed on the support substrate, and in which the coating layer is constituted by the first zeolite, the second zeolite and the oxidizing catalyst. In a case of this catalyst, it is possible to constitute the coating layer from a mixture powder of a powdered first zeolite, a powdered second zeolite and a powdered oxidizing catalyst.

A configuration of the support substrate can be a pellet shape, a honeycomb shape, and so on. And, in order to form the coating layer on the support substrate, the aforementioned mixture powder is mixed with water to make a slurry, it is wet-coated on the support substrate, it is thereafter dried and burned, and thereby it is possible to produce the aforementioned exhaust-gas purifying catalyst.

Alternatively, as one of the embodiment forms of the present exhaust-gas purifying catalyst, it is preferable to make it into a multi-layered structure, which comprises an adsorbing layer, serving as the coating layer and being composed of the first zeolite and the second zeolite, and an oxidizing layer being composed of the oxidizing catalyst formed on the adsorbing layer.

In this case, compared with the case where the coating layer is constituted by a mixture layer being composed of the first zeolite, the second zeolite and the oxidizing catalyst, and a case where the coating layer is made into a multi-layered structure being composed of the oxidizing layer formed on the support substrate and the adsorbing layer formed on this oxidizing layer, it is possible to much more securely oxidize and purify the HC, which are eliminated from the adsorbing layer, by the oxidizing layer. Namely, like this exhaust-gas purifying catalyst, when the oxidizing layer is layered on the adsorbing layer, the HC, which are eliminated from the adsorbing layer, assuredly pass through the oxidizing layer, and also the HC, which are emitted directly from the engine, are likely to contact with the oxidizing layer disposed as the uppermost layer, and accordingly it becomes possible to oxidize and purify the HC, which are eliminated from the adsorbing layer and which are emitted directly from the engine, by securely contacting them with the noble metal.

In addition, as one of the embodiment forms of the present exhaust-gas purifying catalyst, it is preferable to make it into a tandem structure, which comprises an adsorbing layer, formed on an upstream side of an exhaust-gas flow and being composed of the first zeolite and the second zeolite, and an oxidizing layer, formed on a downstream side of the adsorbing layer and being composed of the oxidizing catalyst. In this case, the HC, which are eliminated from the upstream-side adsorbing layer, contact with the oxidizing layer, and accordingly it is possible to securely oxidize and purify them by the downstream-side oxidizing layer. Note that, when making the tandem structure, the coating layer of one support substrate can be divided into the adsorbing layer and the oxidizing layer, or the adsorbing layer and the oxidizing layer can be formed on two support substrates, respectively, and these can be disposed in series in an exhaust-gas passage.

As described so far, in accordance with the present exhaust-gas purifying catalyst, it is possible to stably adsorb and purify a variety of HC, and accordingly it becomes possible to reduce the HC emission amount. In particular, by making the coating layer into the multi-layered structure which comprises the adsorbing layer and the oxidizing layer formed thereon, or by making the composition ratio of the first zeolite with respect to the second zeolite, the noble-metal loading amount, and the composition ratio of the first and second zeolites with respect to the porous oxide falling in the specific ranges, it becomes possible to further reduce the HC emission amount.

(Examples)
Hereinafter, the present invention will be described specifically with reference to examples and comparative examples.

(Example No. 1)
1.5 mol of ethylene glycol was refluxed and kept at 80 °C , and while stirring it, 0.4 mol of tetraethyl orthosilicate was dropped to dissolve therein. After further stirring and mixing them at 80 °C for 2 hours, they were kept at 80 °C , while stirring them, 3.2 mol of distilled water was dropped thereto to cause a hydrolysis, and they were further stirred for 2 hours.

While keeping the resulting mixture solution at 80 °C and stirring it, 0.1 mol of tetrapropyl ammonium (hereinafter referred to as TPA), serving as the template member, was dropped thereto, was further stirred at 80 °C for 3 hours, and thereby a gel mixture was prepared.

The resulting gel mixture was charged into a 150 c.c. pressure-resistant container, and was kept at 150 °C for 5 days to carry out a hydrothermal synthesis. The resulting precipitate was filtered, was washed with distilled water, was dried, was burned at 600 °C for 5 hours, and thereby a fine ZSM-5 powder was obtained. When this ZSM-5 powder was observed by an SEM, the average primary particle diameter was 0.42 *µ* m. Note that, in this ZSM-5 powder, a trace amount of an Al ₂ O ₃ component, which resulted from impurities in the raw materials, was contained, and the SiO ₂ /Al ₂ O ₃ molar ratio was about 80,000. Also, note that no monovalent metallic elements were contained at all.

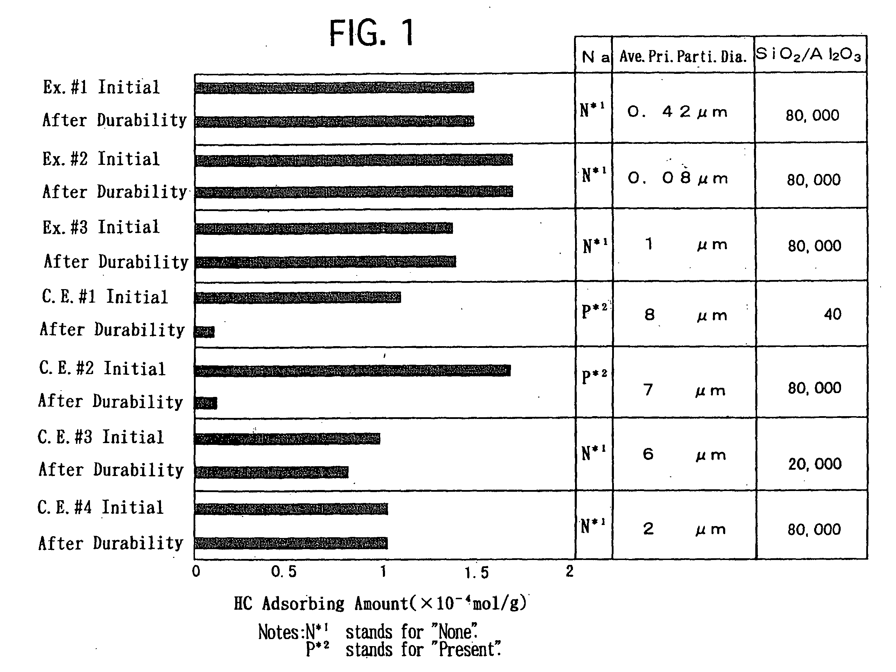

The resulting ZSM-5 powder was formed by a hydrostatic pressure of 100 MPa to make a green compact, it was pulverized and was passed through a sieve having a sieve opening of 0.5-0.7 mm, and thereby pellets were prepared. A pre-treatment was carried out in which these pellets were heated at 400 °C for 30 minutes in a nitrogen gas flow, they were cooled down to 40 °C or less, and thereafter propylene (C ₃ H ₆ ) was added into the nitrogen gas flow so as to be 3,000 ppmC and was adsorbed thereonto for 30 minutes. Thereafter, the C ₃ H ₆ supply was stopped, and an amount of C ₃ H ₆ , which was eliminated at room temperature within 5 minutes, was measured. The result is illustrated in Fig. 1 as an initial adsorbing amount.

In addition, the aforementioned pellets were disposed in a model gas, which had an automotive exhaust-gas stoichiometric composition, and a durability test was carried out in which they were heated at 800 °C for 5 hours. And, with regard to the pellets after the durability test, the eliminating C ₃ H ₆ amount was measured in the same manner as set forth above. The result is illustrated in Fig. 1 as an after-durability adsorbing amount.

(Example No. 2)
After stirring and mixing 0.4 mol of tetraethyl orthosilicate in reflux at 80 °C for 2 hours, while keeping it at 80 °C and stirring it, 3.2 mol of distilled water was dropped thereto to cause a hydrolysis, and was further stirred for 2 hours.

While keeping the resulting mixture solution at 80 °C and stirring it, 0.1 mol of TPA, serving as the template member, was dropped thereto, was further stirred at 80 °C for 3 hours, and thereby a gel mixture was prepared.

The resulting gel mixture was charged into a 150 c.c. pressure-resistant container, and was kept at 150 °C for 5 days to carry out a hydrothermal synthesis. The resulting precipitate was filtered, was washed with distilled water, was dried, was burned at 600 °C for 5 hours, and thereby a fine ZSM-5 powder was obtained. When this ZSM-5 powder was observed by an SEM, the average primary particle diameter was 0.08 *µ* m. Note that, in this ZSM-5 powder, an Al ₂ O ₃ component, which resulted from impurities in the raw materials, was contained, and the SiO ₂ /Al ₂ O ₃ molar ratio was about 80,000. Also, note that no monovalent metallic elements were contained at all.

The resulting ZSM-5 powder was made into pellets in the same manner as Example No. 1, and the initial and after-durability-test HC elimination amounts were measured likewise. The results are illustrated in Fig. 1.

(Example No. 3)
Except that the amount of TPA, serving as the template member, was made 0.075 mol, a fine ZSM-5 powder was prepared in the same manner as Example No. 1. When this ZSM-5 powder was observed by an SEM, the average primary particle diameter was 1.08 *µ* m. Note that, in this ZSM-5 powder, an Al ₂ O ₃ component, which resulted from impurities in the raw materials, was contained, and the SiO ₂ /Al ₂ O ₃ molar ratio was about 80,000. Also, note that no monovalent metallic elements were contained at all.

The resulting ZSM-5 powder was made into pellets in the same manner as Example No. 1, and the initial and after-durability-test HC elimination amounts were measured likewise. The results are illustrated in Fig. 1.

(Comparative Example No. 1)
1.5 mol of ethylene glycol and 0.2 mol of aluminum nitrate were kept in reflux at 80 °C , while stirring them, 0.4 mol of tetraethyl orthosilicate was dropped thereto to dissolve therein. After further stirring and mixing them at 80 °C for 2 hours, they were kept at 80 °C , while stirring them, an aqueous solution, in which 0.2 mol of sodium chloride (NaCl) was dissolved in 3.2 mol of distilled water, was dropped thereto to cause a hydrolysis, and they were further stirred for 2 hours.

While keeping the resulting mixture solution at 80 °C and stirring it, 0.1 mol of tetrapropyl ammonium (hereinafter referred to as TPA), serving as the template member, was dropped thereto, was further stirred at 80 °C for 3 hours, and thereby a gel mixture was prepared.

The resulting gel mixture was charged into a 150 c.c. pressure-resistant container, and was kept at 150 °C for 5 days to carry out a hydrothermal synthesis. The resulting precipitate was filtered, was washed with distilled water, was dried, was burned at 600 °C for 5 hours, and thereby a fine ZSM-5 powder was obtained. When this ZSM-5 powder was observed by an SEM, the average primary particle diameter was 8 *µ* m. The SiO ₂ /Al ₂ O ₃ molar ratio of this ZSM-5 powder was 40. Note, when this ZSM-5 powder was analyzed by an FT-IR, the peak of the OH group was very low. This means that the OH groups, being a hydrophilic group, were less.

And, the resulting ZSM-5 powder was made into pellets in the same manner as Example No. 1, and the initial and after-durability-test HC elimination amounts were measured likewise. The results are illustrated in Fig. 1.

(Comparative Example No. 2)
1.5 mol of ethylene glycol was kept in reflux at 80 °C , while stirring it, 0.4 mol of tetraethyl orthosilicate was dropped thereto to dissolve therein. After further stirring and mixing them at 80 °C for 2 hours, they were kept at 80 °C , while stirring them, an aqueous solution, in which 0.2 mol of sodium chloride (NaCl) was dissolved in 3.2 mol of distilled water, was dropped thereto to cause a hydrolysis, and they were further stirred for 2 hours.

While keeping the resulting mixture solution at 80 °C and stirring it, 0.1 mol of tetrapropyl ammonium (hereinafter referred to as TPA), serving as the template member, was dropped thereto, was further stirred at 80 °C for 3 hours, and thereby a gel mixture was prepared.

The resulting gel mixture was charged into a 150 c.c. pressure-resistant container, and was kept at 150 °C for 5 days to carry out a hydrothermal synthesis. The resulting precipitate was filtered, was washed with distilled water, was dried, was burned at 600 °C for 5 hours, and thereby a fine ZSM-5 powder was obtained. When this ZSM-5 powder was observed by an SEM, the average primary particle diameter was 7 *µ* m. The SiO ₂ /Al ₂ O ₃ molar ratio of this ZSM-5 powder was 80,000. Note, when this ZSM-5 powder was analyzed by an FT-IR, the peak of the OH group was very low. This means that the OH groups, being a hydrophilic group, were less.

And, the resulting ZSM-5 powder was made into pellets in the same manner as Example No. 1, and the initial and after-durability-test HC elimination amounts were measured likewise. The results are illustrated in Fig. 1.

(Comparative Example No. 3)
A commercially available high-silica ZSM-5 ("HSZ890" produced by THOSO Co., Ltd.) was made into pellets in the same manner as Example No. 1, and the initial and after-durability-test HC elimination amounts were measured likewise. The results are illustrated in Fig. 1. Note that the average primary particle diameter of this high-silica ZSM-5 was 6 *µ* m, that the SiO ₂ /Al ₂ O ₃ molar ratio was 20,000, and that Na was not contained therein.

(Comparative Example No. 4)
Except that the amount of TPA, serving as the template member, was made 0.05 mol, a fine ZSM-5 powder was prepared in the same manner as Example No. 1. When this ZSM-5 powder was observed by an SEM, the primary particle diameter was fluctuated greatly so that it fell in a range of 0.5-5 *µ* m, and that it was about 2 *µ* m on the average value. Note that, in this ZSM-5 powder, an Al ₂ O ₃ component, which resulted from impurities in the raw materials, was contained, and the SiO ₂ /Al ₂ O ₃ molar ratio was about 80,000. Also, note that no monovalent metallic elements were contained at all.

And, the resulting ZSM-5 powder was made into pellets in the same manner as Example No. 1, and the initial and after-durability-test HC elimination amounts were measured likewise. The results are illustrated in Fig. 1.

<Evaluation>
From Fig. 1, it is understood that the HC adsorbing members of Comparative Example No. 1 and Comparative Example No. 2, which contained Na, exhibited extremely small HC adsorbing amounts after durability and were inferior in terms of the durability. Moreover, since the HC adsorbing members of Comparative Example No. 3 and Comparative Example No. 4 did not contain Na, they exhibited small differences between the initial and after-durability HC adsorbing amounts, but, compared with the respective examples, they exhibited less and insufficient HC adsorbing amounts.

However, the HC adsorbing amounts of the HC adsorbing members of the respective examples were stably large from the beginning period to the after-durability period, and it is apparent this is because Na was not contained therein, the average primary particle diameter was made 1 *µ* m or less and the SiO ₂ /Al ₂ O ₃ molar ratio was made high.

(Example No. 4)
1 kg of a ZSM-5 (pore diameter: 5.5 Å ; and SiO ₂ /Al ₂ O ₃ = 28) powder and silver nitrate (140 g content by the Ag amount) were prepared, after evaporating, drying and solidifying in an aqueous solution, were dried under 120 °C x 2 hours, were further burned under 500 °C x 2 hours, and thereby an Ag-loaded ZSM-5 powder, in which Ag was ion-exchanged by 100%, was obtained. Note that the loading amount of Ag was 12% by weight.

The total amount of the Ag-loaded ZSM-5 powder, 400 g of a type H type Y zeolite (pore diameter: 8 Å ; and SiO ₂ /Al ₂ O ₃ = 400) powder, 500 g of a silica sol (solid content: 40%), and 1.7 kg of pure water were mixed, and thereby a slurry was prepared.

This slurry was coated evenly on the entirety of a monolithic honeycomb support substrate (volume: 1 liter; and number of cells: 400 cells/in ² ), which was made from cordierite, after drying it at 250 °C for 1 hour, was burned at 500 °C for 1 hour, and thereby an adsorbing layer, being composed of a single mixture layer, was formed on the support substrate, single mixture layer which was composed of the Ag-loaded ZSM-5, serving as the first zeolite, and the type Y zeolite, serving as the second zeolite. This adsorbing layer was formed in an amount of 140 g with respect to 1 liter of the support substrate, and, in the 140 g, the Ag-loaded ZSM-5 occupied 100g and the type Y zeolite occupied 40 g. Moreover, in this adsorbing layer, the weight ratio between the Ag-loaded ZSM-5 and the type Y zeolite (the ZSM-5/the type Y zeolite) was 100/40 (= 2.5/1) .

While, 500 g of a CeO ₂ powder, 500 g of a γ -alumina powder, 1 kg of water, and 500 g of an alumina sol were mixed, were stirred, and thereby a slurry was prepared.

This slurry was coated uniformly on the entirety of the adsorbing layer, which was formed on the aforementioned support substrate, after drying it at 250 °C for 1 hour, was burned at 500 °C for 2 hours, and thereby an alumina layer was formed. In this alumina layer, the CeO ₂ was contained in an amount of 60 g with respect to 1 liter of the aforementioned support substrate, and the Al ₂ O ₃ was contained in an amount of 60 g with respect thereto.

And, it was immersed into a palladium nitrate aqueous solution of a predetermined concentration, after being taken up therefrom and being blown off the extra droplets, was dried at 250 °C for 1 hour, and thereby Pd was loaded on the aforementioned alumina layer so that an oxidizing layer was formed. The loading amount of this Pd was 10 g with respect to 1 liter of the aforementioned support substrate.

Note that the weight ratio between the aforementioned adsorbing layer and the aforementioned oxidizing layer was 140/120 (= 7/6).

Thus, an exhaust-gas purifying catalyst of this example was completed in which the adsorbing layer, comprising the single mixture layer which was composed of the Ag-loaded ZSM-5, serving as the first zeolite, and the type Y zeolite, serving as the second zeolite, was formed on the support substrate, and, at the same time, in which the oxidizing layer, comprising Al ₂ O ₃ with Pd loaded, was formed on this adsorbing layer.

(Example No. 5)
In the same manner as the aforementioned Example No. 4, an adsorbing layer was formed on a support substrate, and an alumina layer was formed on this adsorbing layer.

And, it was immersed into a dinitro diammine platinum nitrate aqueous solution of a predetermined concentration, after being taken up therefrom and being blown off the extra droplets, was dried at 250 °C for 1 hour, and thereby Pt was loaded on the aforementioned alumina layer. The loading amount of this Pt was 5 g with respect to 1 liter of the aforementioned support substrate. Thereafter, it was immersed into a rhodium nitrate aqueous solution of a predetermined concentration, after being taken up therefrom and being blown off the extra droplets, was dried at 250 °C for 1 hour, and thereby Rh was loaded on the aforementioned alumina layer. The loading amount of this Rh was 0.5 g with respect to 1 liter of the aforementioned support substrate, and the summed loading amount of the noble metals was 5.5 g with respect to 1 liter of the support substrate.

Thus, an exhaust-gas purifying catalyst of this example was completed in which the adsorbing layer, comprising the single mixture layer which was composed of the Ag-loaded ZSM-5, serving as the first zeolite, and the type Y zeolite, serving as the second zeolite, was formed on the support substrate, and, at the same time, in which the oxidizing layer, comprising alumina with Pd and Rh loaded, was formed on this adsorbing layer.

(Example No. 6)
Except that ferrierite (pore diameter: 4 Å ; and SiO ₂ /Al ₂ O ₃ = 32) was used instead of the ZSM-5, an exhaust-gas purifying catalyst of this example was completed in the same manner as the aforementioned Example No. 5.

(Example No. 7)
Except that, in the aforementioned adsorbing layer, the Ag-loaded ZSM-5, serving as the first zeolite, was formed in an amount of 70 g with respect to 1 liter of the aforementioned support substrate, that the type Y zeolite, serving as the second zeolite, was formed in an amount of 70 g with respect thereto, and that the weight ratio (the ZSM-5/the type Y zeolite) between the Ag-loaded ZSM-5 and the type Y zeolite was made 70/70 (= 1/1) in this adsorbing layer, an exhaust-gas purifying catalyst of this example was completed in the same manner as the aforementioned Example No. 4.

(Example No. 8)
Except that, in the aforementioned adsorbing layer, the Ag-loaded ZSM-5, serving as the first zeolite, was formed in an amount of 125 g with respect to 1 liter of the aforementioned support substrate, that the type Y zeolite, serving as the second zeolite, was formed in an amount of 15 g with respect thereto, and that the weight ratio (the ZSM-5/the type Y zeolite) between the Ag-loaded ZSM-5 and the type Y zeolite was made 125/15 (= 25/3) in this adsorbing layer, an exhaust-gas purifying catalyst of this example was completed in the same manner as the aforementioned Example No. 4.

(Example No. 9)
1 kg of a ZSM-5 (pore diameter: 5.5 Å ; and SiO ₂ /Al ₂ O ₃ = 28) powder and a tetraammine palladium hydroxide salt (140 g content by the Pd amount) were prepared, after evaporating, drying and solidifying them, were dried under 120 °C x 2 hours, were further burned under 500 °C x 2 hours, and thereby a Pd-loaded ZSM-5 powder, in which Pd was ion-exchanged by 100%, was obtained. Note that the loading amount of Pd was 12% by weight.

Except that this Pd-loaded ZSM-5 was used instead of the Ag-loaded ZSM-5, an exhaust-gas purifying catalyst of this example was completed in the same manner as the aforementioned Example No. 4.

(Example No. 10)
First, an Ag-loaded ZSM-5 powder was obtained which was the same as that of the aforementioned Example No. 4. While, a ZSM-5 powder was prepared whose SiO ₂ /Al ₂ O ₃ = 2,000. And, this Ag-loaded ZSM-5 and the ZSM-5 of the high SiO ₂ /Al ₂ O ₃ molar ratio were used as the first zeolite.

Namely, 1 kg of the aforementioned Ag-loaded ZSM-5 powder, 500 g of the aforementioned high SiO ₂ /Al ₂ O ₃ -molar ratio ZSM-5 powder, 400 g of a type H type Y zeolite (pore diameter: 8 Å ; and SiO ₂ /Al ₂ 0 ₃ molar ratio = 400) powder, 650 g of a silica sol, and 2.2 kg of pure water were mixed, and thereby a slurry was prepared.

This slurry was coated evenly on the entirety of a support substrate, which was the same as that of the aforementioned Example No. 4, after drying it at 250 °C for 1 hour, was burned at 500 °C for 1 hour, and thereby an adsorbing layer, being composed of a single mixture layer, was formed on the support substrate, single mixture layer which was composed of the Ag-loaded ZSM-5 as well as the high SiO ₂ /Al ₂ O ₃ -molar ratio ZSM-5, serving as the first zeolite, and the type Y zeolite, serving as the second zeolite. This adsorbing layer was formed in an amount of 190 g with respect to 1 liter of the support substrate, and, in the 190 g, the Ag-loaded ZSM-5 occupied 100g, the high SiO ₂ /Al ₂ O ₃ -molar ratio ZSM-5 occupied 50 g and the type Y zeolite occupied 40g. Moreover, in this adsorbing layer, the weight ratio between the Ag-loaded ZSM-5 as well as the high SiO ₂ /Al ₂ O ₃ -molar ratio ZSM-5 and the type Y zeolite (the ZSM-5/the type Y zeolite) was 150/40 (= 15/4).

And, in the same manner as the aforementioned Example No. 4, on the adsorbing layer formed on the aforementioned support substrate, a porous oxide layer, which was composed of CeO ₂ and γ -alumina, was formed, and Pd was loaded on this porous oxide layer.

Note that the weight ratio between the Ag-loaded ZSM-5, the high SiO ₂ /Al ₂ O ₃ -molar ratio ZSM-5, serving as the aforementioned first zeolite, as well as the type Y zeolite, serving as the aforementioned second zeolite, and the CeO ₂ as well as the γ - alumina, serving as the porous oxide, (the ZSM-5 and type Y zeolite/the CeO ₂ and γ-alumina) was 190/120 (= 19/12).

Thus, an exhaust-gas purifying catalyst of this example was completed in which the adsorbing layer, comprising the single mixture layer which was composed of the Ag-loaded ZSM-5 and the high SiO ₂ /Al ₂ O₃ -molar ratio ZSM-5, serving as the first zeolite, as well as the type Y zeolite, serving as the second zeolite, was formed on the support substrate, and, at the same time, in which the oxidizing layer, comprising the porous oxides with Pd loaded, was formed on this adsorbing layer.

(Example No. 11)
First, an Ag-loaded ZSM-5 was obtained which was the same as that of the aforementioned Example No. 4. In addition, a type Y zeolite was prepared which was the same as that of the aforementioned Example No. 4.

While, a palladium nitrate aqueous solution of a predetermined concentration was impregnated into a mixture powder of a CeO ₂ powder and a γ-alumina powder, after evaporating, drying and solidifying them, they were dried at 250 °C for 1 hour, and thereby a mixture powder of porous oxides with Pd loaded was obtained.

And, 1 kg of the aforementioned Ag-loaded ZSM-5 powder, 400 g of the aforementioned type Y zeolite, 1.2 kg of the aforementioned mixture powder of porous oxides with Pd loaded, 1 kg of an alumina sol, and 2.5 kg of pure water were mixed, were stirred, and thereby a slurry was prepared.

This slurry was coated evenly on the entirety of a support substrate, which was the same as that of the aforementioned Example No. 4, after drying it at 250 °C for 1 hour, and was burned at 500 °C for 2 hours.

Thus, an exhaust-gas purifying catalyst of this example was completed in which a single mixture layer, comprising the Ag-loaded ZSM-5, serving as the first zeolite, the type Y zeolite, serving as the second zeolite, and the porous oxides with Pd loaded, was formed on the aforementioned support substrate.

Note that, in the aforementioned mixture layer, the coating amounts of the respective components with respect to 1 liter of the support substrate were 100 g for the Ag-loaded ZSM-5, serving as the first zeolite, 40 g for the type Y zeolite, serving as the second zeolite, 60 g for the CeO ₂ , serving as the porous oxide, and 60 g for the γ -alumina, serving as the porous oxide. Moreover, the leading amount of Pd, serving as the noble metal, was 10 g with respect to 1 liter of the support substrate.

In addition, the weight ratio between the Ag-loaded ZSM-5, serving as the aforementioned first zeolite, as well as the type Y zeolite, serving as the aforementioned second zeolite, and the CeO ₂ as well as the y -alumina, serving as the porous oxides,(the Ag-loaded ZSM-5 and type Y zeolite/the CeO ₂ and γ -alumina) was 140/120 (= 7/6).

(Example No. 12)
In the aforementioned adsorbing layer, the Ag-loaded ZSM-5, serving as the first zeolite, was formed in an amount of 50 g with respect to 1 liter of the aforementioned support substrate, the type Y zeolite, serving as the second zeolite, was formed in an amount of 20 g with respect thereto, and the weight ratio (the ZSM-5/the type Y zeolite) between the Ag-loaded ZSM-5 and the type Y zeolite was made 50/20 (= 5/2) in this adsorbing layer.

Moreover, in the aforementioned oxidizing layer, the CeO ₂ , serving as the porous oxide, was formed in an amount of 80 g with respect to 1 liter of the aforementioned support substrate, and the γ -alumina, serving as the porous oxide, was formed in an amount of 80 g with respect thereto.

Note that the weight ratio (the Ag-loaded ZSM-5 and type Y zeolite/the CeO ₂ and γ -alumina) between the Ag-loaded ZSM-5, serving as the aforementioned first zeolite, as well as the type Y zeolite, serving as the aforementioned second zeolite, and the CeO ₂ , serving as the porous oxide, as well as the γ -alumina, serving as the porous oxide, was 70/160 (= 7/16).

Except the aforementioned arrangements, an exhaust-gas purifying catalyst of this example was completed in the same manner as the aforementioned Example No. 4.

(Example No. 13)
In the aforementioned adsorbing layer, the Ag-loaded ZSM-5, serving as the first zeolite, was formed in an amount of 100 g with respect to 1 liter of the aforementioned support substrate, the type Y zeolite, serving as the second zeolite, was formed in an amount of 40 g with respect thereto, and the weight ratio (the ZSM-5/the type Y zeolite) between the Ag-loaded ZSM-5 and the type Y zeolite was made 100/40 (= 5/2) in this adsorbing layer.

Moreover, in the aforementioned oxidizing layer, the CeO ₂ , serving as the porous oxide, was formed in an amount of 30 g with respect to 1 liter of the aforementioned support substrate, and the γ -alumina, serving as the porous oxide, was formed in an amount of 30 g with respect thereto.

Note that the weight ratio (the Ag-loaded ZSM-5 and type Y zeolite/the CeO ₂ and γ -alumina) between the Ag-loaded ZSM-5, serving as the aforementioned first zeolite, as well as the type Y zeolite, serving as the aforementioned second zeolite, and the CeO ₂ as well as the γ -alumina, serving as the porous oxide, was 140/60 (= 7/3).

Except the aforementioned arrangements, an exhaust-gas purifying catalyst of this example was completed in the same manner as the aforementioned Example No. 4.

(Example No. 14)
In the aforementioned adsorbing layer, the Ag-loaded ZSM-5, serving as the first zeolite, was formed in an amount of 50 g with respect to 1 liter of the aforementioned support substrate, the type Y zeolite, serving as the second zeolite, was formed in an amount of 90 g with respect thereto, and the weight ratio (the ZSM-5/the type Y zeolite) between the Ag-loaded ZSM-5 and the type Y zeolite was made 50/90 (= 5/9) in this adsorbing layer.

Except the aforementioned arrangements, an exhaust-gas purifying catalyst of this example was completed in the same manner as the aforementioned Example No. 4.

(Example No. 15)
Except that, in the aforementioned oxidizing layer, the loading amount of Pt was made 2 g with respect to 1 liter of the aforementioned support substrate, that the loading amount of Rh was made 0.3 g with respect to 1 liter of the aforementioned support substrate, and that the summed loading amount of the noble metals was made 2.3 g with respect to 1 liter of the support substrate, an exhaust gas-purifying catalyst of this example was completed in the same manner as the aforementioned Example No. 5.

(Example No. 16)
By using the same slurry and support substrate as those of the aforementioned Example No. 4, while the Ag-loaded ZSM-5, serving as the first zeolite, and the type Y zeolite, serving as the second zeolite, were coated on an upstream side of the support substrate by 140 g/liter, the CeO ₂ and the γ -alumina were coated on a downstream side of the support substrate by 120 g/liter (60 g/liter for each of them), and Pd was loaded thereon by 10 g/liter.

Note that all of the amounts of the Ag, Pd, zeolites, CeO ₂ and γ -alumina were the same as those of the aforementioned Example No. 4.

Thus, a tandem-type exhaust-gas purifying catalyst of this example was completed in which an adsorbing layer, comprising a single mixture layer being composed of the Ag-loaded ZSM-5, serving as the first zeolite, and the type Y zeolite, serving as the second zeolite, was formed on the upstream side of the support substrate, and in which an oxidizing layer, comprising the porous oxides with Pd loaded, was formed on the downstream side of the support substrate.

(Comparative Example No. 5)
Except that the aforementioned adsorbing member was made as an adsorbing layer, which consisted of only the Ag-loaded ZSM-5, serving as the first zeolite, it was the same as the aforementioned Example No. 4.

Namely, in the same manner as the aforementioned Example No. 1, after obtaining the Ag-loaded ZSM-5 powder, 1 kg of this Ag-loaded ZSM-5 powder, 350 g of a silica sol, and 1.2 kg of pure water were mixed, and thereby a slurry was prepared.

And, in the same manner as the aforementioned Example No. 4, this slurry was coated uniformly on the entirety of the aforementioned support substrate, and an adsorbing member layer, which consisted of only the Ag-loaded ZSM-5, serving as the first zeolite, was formed on the support substrate. This Ag-loaded ZSM-5 was formed in an amount of 140 g with respect to 1 liter of the support substrate.

And, in the same manner as the aforementioned Example No. 4, the aforementioned oxidizing layer was formed on the aforementioned adsorbing layer. Note that the weight ratio (the Ag-loaded ZSM-5/the CeO ₂ and γ -alumina) between the Ag-loaded ZSM-5, serving as the aforementioned first zeolite, and the CeO ₂ as well as the γ -alumina, serving as the porous oxide, was 140/120 (= 7/6).

Thus, an exhaust-gas purifying catalyst of Comparative Example No. 5 was completed in which the adsorbing layer, consisted of only the Ag-loaded ZSM-5, serving as the first zeolite, was formed on the support substrate, and, at the same time, in which the oxidizing layer, comprising the porous oxides with Pd loaded, was formed on this adsorbing layer.

(Comparative Example No. 6)
Except that an adsorbing layer was not formed, it was the same as the aforementioned Example No. 4.

Namely, in the same manner as the aforementioned Example No. 1, 500 g of a CeO 2 powder, 500 g of a γ -alumina powder, 1 kg of water, and 500 g of an alumina sol were mixed and stirred, and thereby a slurry was prepared, thereafter, this slurry was coated uniformly on the entirety of the same support substrate as that of the aforementioned Example No. 4, and thereby a porous oxide layer was formed. In this porous oxide layer, with respect to 1 liter of the aforementioned support substrate, the CeO ₂ was formed in an amount of 60 g, and the Al ₂ O ₃ was formed in an amount of 60 g.

And, in the same manner as the aforementioned Example No. 4, Pd was loaded on the aforementioned porous oxide layer. The loading amount of this Pd was 10 g with respect to 1 liter of the aforementioned support substrate.

Thus, an exhaust-gas purifying catalyst of Comparative Example No. 6 was completed in which only the oxidizing layer, comprising the porous oxides with Pd loaded, was formed on the support substrate.

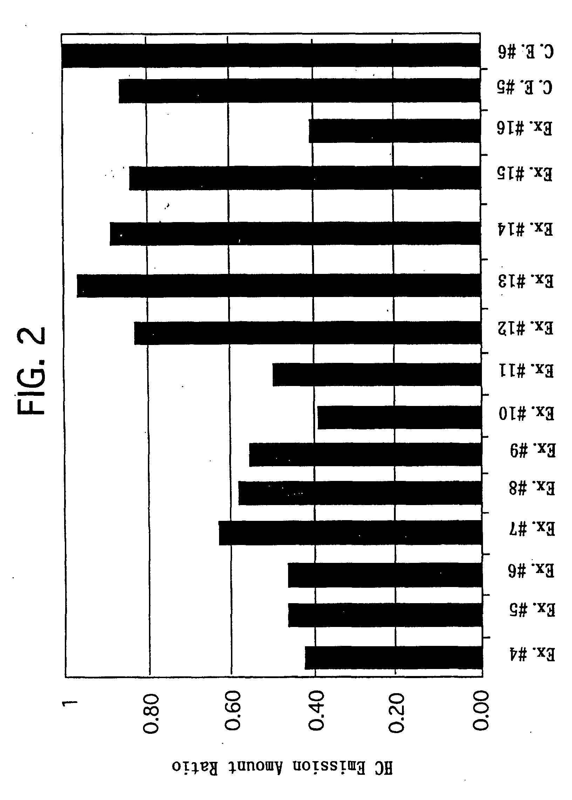

<Test and Evaluation>
The respective exhaust-gas purifying catalysts were installed to an exhaust system of a gasoline engine of an actual automobile, and the HC emission was measured in the cold-start stage (a period in which the exhaust-gas temperature increased up to 300 °C approximately). The results are set forth in a graph of Fig. 2 and Table 1. In the graph of Fig. 2 and Table 1, the values of the HC-emission-amount ratio were expressed as the relative values with respect to the total HC emission amount of the aforementioned Comparative Example No. 6 when it was regarded as 1.

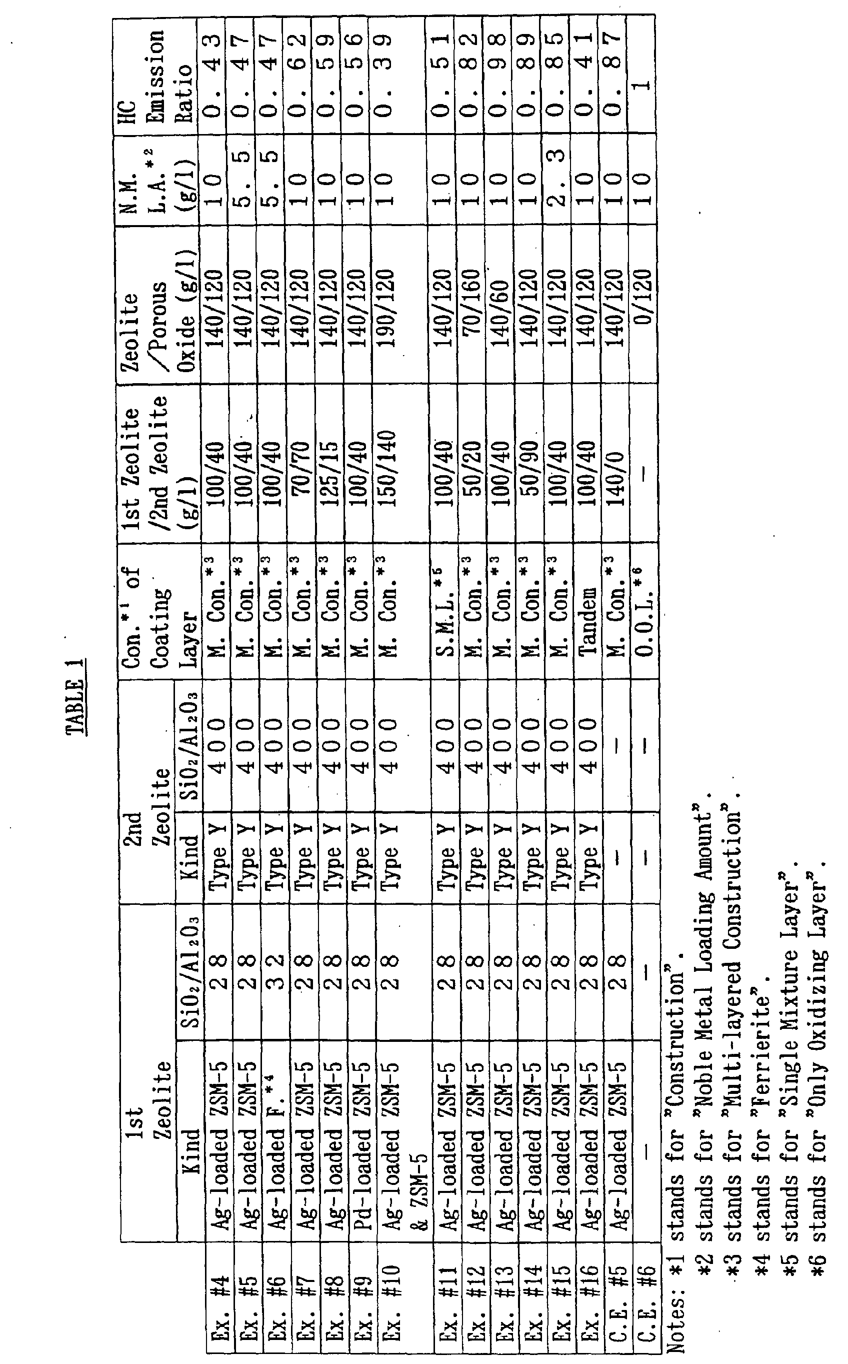

By comparing Comparative Example No. 6, in which only the oxidizing layer, comprising the CeO 2 and γ -Al ₂ O ₃ loaded with Pd , was formed on the support substrate, with Example Nos. 4, 7-14 and 16 as well as Comparative Example No. 5, in which Pd was loaded in the same amount as that of Comparative Example No. 6 and in which the CeO ₂ and γ -Al ₂ O ₃ were coated in the same amounts as those of Comparative Example No. 6, it is understood that the HC emission amounts could be reduced sharply by including the predetermined first and second zeolites in the coating layer in addition to the CeO ₂ and γ -Al ₂ O ₃ loaded with Pd.

Further, by comparing Comparative Example No. 5 and Example No. 4 as well as Example No. 11, it is understood that the HC emission amounts could be reduced sharply by constituting the adsorbing layer with the Ag-loaded ZSM-5, serving as the first zeolite, and the type Y zeolite, serving as the second zeolite, than by constituting the adsorbing layer with the Ag-loaded ZSM-5, serving as the first zeolite, alone.

Furthermore, by comparing Example No. 4 and Example No. 11, as for the construction of the coating layer, it is understood that it is more desirable to make the multi-layered construction, which comprised the adsorbing layer, being composed of the first and second zeolites, and the oxidizing layer, formed on this adsorbing layer and being composed of the porous oxide with the noble metal loaded, than to make the single mixture layer, which is composed of the first zeolite, the second zeolite and the porous oxide with the noble metal loaded.

Moreover, by comparing Example No. 4 with Example Nos. 7 and 8 as well as Example No. 14, it is understood that it is desirable to make the weight ratio between the first zeolite and the second zeolite falling in the range of the first zeolite/the second zeolite = 1/1-9/1, and it is understood that it is particularly desirable to make the fist zeolite greater than the second zeolite.

In addition, by comparing Example No. 4 and Example Nos. 12 as well as 13, it is understood that it is desirable to make the weight ratio between the first zeolite as well as the second zeolite and the porous oxide falling in the range of the first zeolite and the second zeolite/the porous oxide = 1/2-2/1.

Still, by comparing Example No. 4 and Example No. 15, it is understood that it is desirable to make the summed loading amount of the noble metal 3 g or more with respect to 1 liter of the support substrate.

Still further, by comparing Example No. 4 and Example No. 10, it is understood that it is desirable to constitute the first zeolite by the Ag-loaded ZSM-5 and the high SiO ₂ /Al ₂ O ₃ molar-ratio ZSM-5 than to constitute the first zeolite by the Ag-loaded ZSM-5 only.

## Claims

1. A hydrocarbon adsorbing member, **characterized in that** it comprises a zeolite having 100 or more of a molar ratio of a silica component with respect to an alumina component (SiO ₂ /Al ₂ O₃ ) and having 1 *µ* m or less of an average primary particle diameter, and that it is free from a monovalent metallic element.

2. A hydrocarbon adsorbing member, **characterized in that** it comprises: a first zeolite being composed of at least one member selected from the group consisting of ZSM-5 and ferrierite, having 100 or less of a molar ratio of a silica component with respect to an alumina component (SiO ₂ /Al ₂ O ₃ ) and being loaded with at least one kind selected from the group consisting of silver (Ag) and palladium (Pd); and
a second zeolite being composed of a type Y zeolite having 200 or more of a molar ratio of a silica component with respect to an alumina component (SiO ₂ /Al ₂ O ₃ ).

3. The hydrocarbon adsorbing member set forth in claim 2, **characterized in that** a composition ratio of said first zeolite to said second zeolite falls in a range of the first zeolite/the second zeolite = 1/1-9/1 by weight.

4. The hydrocarbon adsorbing member set forth in claim 2, **characterized in that** the molar ratio of the silica component with respect to the alumina component (SiO ₂ /Al ₂ O ₃ ) falls in a range of 25-70 in said first zeolite.

5. The hydrocarbon adsorbing member set forth in claim 2, **characterized in that** ZSM-5 having 500 or more of the molar ratio of the silica component with respect to the alumina component (SiO ₂ /Al ₂ O ₃ ) is further included in said first zeolite.

6. The hydrocarbon adsorbing member set forth in claim 2, **characterized in that** the molar ratio of the silica component with respect to the alumina component (SiO ₂ /Al ₂ O ₃ ) is 400 or more in said second zeolite.

7. A catalyst for purifying an exhaust gas, **characterized in that** it comprises: a first zeolite being composed of at least one member selected from the group consisting ZSM-5 and ferrierite, having 100 or less of a molar ratio of a silica component with respect to an alumina component (SiO ₂ /Al ₂ O ₃ ) and being loaded with at least one kind selected from the group consisting of silver (Ag) and palladium (Pd);
a second zeolite being composed of a type Y zeolite having 200 or more of a molar ratio of a silica component with respect to an alumina component (SiO ₂/Al ₂ O ₃ ); and
an oxidizing catalyst being composed of a porous oxide loaded with a noble metal.

8. The catalyst for purifying an exhaust gas set forth in claim 7, **characterized in that** a composition ratio of said first zeolite to said second zeolite falls in a range of the first zeolite/the second zeolite = 1/1-9/1 by weight.

9. The catalyst for purifying an exhaust gas set forth in claim 7, **characterized in that** the molar ratio of the silica component with respect to the alumina component (SiO ₂ /Al ₂ O ₃ ) falls in a range of 25-70 in said first zeolite.

10. The catalyst for purifying an exhaust gas set forth in claim 7, **characterized in that** ZSM-5 having 500 or more of the molar ratio of the silica component with respect to the alumina component (SiO ₂ /Al ₂ O ₃ ) is further included in said first zeolite.

11. The catalyst for purifying an exhaust gas set forth in claim 7, **characterized in that** the molar ratio of the silica component with respect to the alumina component (SiO ₂ /Al ₂ O ₃ ) is 400 or more in said second zeolite.

12. The catalyst for purifying an exhaust gas set forth in claim 7, **characterized in that** a composition ratio of said first zeolite as well as said second zeolite to said oxidizing catalyst falls in a range of the first zeolite and second zeolite/the oxidizing catalyst = 1/2-2/1 by weight.

13. The catalyst for purifying an exhaust gas set forth in claim 7, **characterized in that** a summed loading amount of the noble metal in said oxidizing catalyst is 3 g or more with respect to 1 liter of said support substrate.

14. The catalyst for purifying an exhaust gas set forth in claim 7, **characterized in that** ceria (CeO ₂ ) is included in said oxidizing catalyst.

15. The catalyst for purifying an exhaust gas set forth in claim 7, **characterized in that** it is a catalyst for purifying an exhaust gas, the catalyst being composed of a support substrate and a coating layer formed on the support substrate, and in that the coating layer is constituted by said first zeolite, said second zeolite and said oxidizing catalyst.

16. The catalyst for purifying an exhaust gas set forth in claim 15, **characterized in that** said coating layer is made into a multi-layered construction being composed of an adsorbing layer, being composed of said first zeolite and said second zeolite, and an oxidizing layer, formed on the adsorbing layer and being composed of said oxidizing catalyst.

17. The catalyst for purifying an exhaust gas set forth in claim 15, **characterized in that** said coating layer is made into a tandem construction being composed of an adsorbing layer, formed on an upstream side of an exhaust-gas flow and being composed of said first zeolite and said second zeolite, and an oxidizing layer, formed on a downstream side of the adsorbing layer and being composed of the oxidizing catalyst.
